# EUROPÄISCHE PATENTSCHRIFT

(11) **EP 1 658 704 B1**
(45) Veröffentlichungstag und Bekanntmachung des Hinweises auf die Patenterteilung: **12.12.2012**
(21) Anmeldenummer: 04766573.2
(22) Anmeldetag: 23.08.2004
(51) Int. Cl.: H04L 12/58, H04L 29/08

(54) **AKTUALISIERUNG EINER EINEM BENUTZER EINES KOMMUNIKATIONSDIENSTES ZUGEORDNETEN ANWESENHEITSINFORMATION**
UPDATE OF PRESENCE DATA ALLOCATED TO THE USER OF A COMMUNICATION SERVICE
ACTUALISATION D'UNE INFORMATION DE PRESENCE AFFECTEE A UN UTILISATEUR D'UN SERVICE DE COMMUNICATION

(30) Priorität: 29.08.2003 DE 10340386
(43) Veröffentlichungstag der Anmeldung: 24.05.2006
(73) Patentinhaber: Siemens Enterprise Communications GmbH & Co. KG, 81379 München (DE)
(72) Erfinder: KLUG, Karl, 83714 Miesbach (DE); LEDERER, Thomas, 82211 Herrsching (DE); MÜLLER, Harald, 82205 München (DE)
(74) Vertreter: Fritzsche, Thomas
(86) Internationale Anmeldenummer: PCT/EP2004/051876
(87) Internationale Veröffentlichungsnummer: WO 2005/025156

(56) Entgegenhaltungen:
- WO-A-02/093959
- WO-A-03/044656
- WO-A-03/069364
- US-A1- 2003 217 171
- DAY ET AL.: "A model for Presence and Instant Messaging" IETF NETWORK WORKING GROUP RFC 2778, 1. Februar 2000 (2000-02-01), XP015008561 INET
- DAY ET AL.: "Instant Messaging/Presence Protocol Requerements" IETF NETWORK WORKING GROUP RFC 2779, 1. Februar 2000 (2000-02-01), XP015008562 INET

## Beschreibung

Die vorliegende Erfindung betrifft ein Verfahren zur Aktualisierung einer einem Benutzer eines Kommunikationsdienstes zugeordneten Anwesenheitsinformation, ein Kommunikationssystem und ein Steuerungsprogramm.

Internet-basierte Instant-Messaging-Anwendungen zum Informationsaustausch innerhalb ausgewählter Benutzergruppen ohne von konventionellen E-Mail-Anwendungen bekannte Zeitverzögerungen erfreuen sich wachsender Beliebtheit. Typische Instant-Messaging-Anwendungen ermöglichen einem Benutzer eine Vorbereitung einer Nachricht an Mitglieder einer ausgewählten Benutzergruppe, auch als "buddy list" bezeichnet, und eine Übermittlung der Nachricht zum im wesentlichen sofortigen Empfang. In umgekehrter Richtung empfängt der Benutzer in analoger Weise Nachrichten von Mitgliedern der ausgewählten Benutzergruppe.

Aus WO 02/43351 ist bekannt, daß in einem Kommunikationssystem ein erster Server zur Bereitstellung von Programmanwendungen und zum Datenaustausch mit einem ersten Client und ein zweiter Server zum Empfang und zur Verwaltung von Anwesenheitsinformationen vorgesehen sind, die dem ersten Client zugeordnet sind. Anwesenheitsinformationen zeigen an, ob ein Benutzer aktuell an einem bestimmten Endgerät im Kommunikationssystem erreichbar ist. Der erste Server ist außerdem zum Datenaustausch mit einem zweiten Client auf Grundlage der zu dem ersten Client zugeordneten Anwesenheitsinformationen vorgesehen.

Die Anwesenheitsinformationen können bei dem in WO 02/43351 beschriebenen Kommunikationssystem zusätzlich mit einer Programmanwendung verknüpft sein. Greift ein Benutzer beispielsweise über ein Endgerät auf eine Programmanwendung zu, so ordnet die Programmanwendung dem Benutzer die Anwesenheitsinformation "aktiv" zu und überwacht am Endgerät Aktivitäten des Benutzers. Falls für einen bestimmten Zeitraum keine Aktivitäten des Benutzers erkennbar sind, so veranlaßt die Programmanwendung eine Übermittlung einer Kontrollmeldung an das Endgerät. Bestätigt der Benutzer die Kontrollmeldung am Endgerät, so bleibt dem Benutzer weiterhin die Anwesenheitsinformation "aktiv" zugeordnet. Andernfalls wird dem Benutzer die Anwesenheitsinformation "inaktiv" oder ein entsprechend passender Wert zugeordnet. Die dem Benutzer zugeordnete Anwesenheitsinformation kann auch Auswirkungen auf eine Zustellung von Nachrichten anderer Benutzer haben. Eine solche Nachricht wird beispielsweise nur dann zugestellt, wenn dem Benutzer auch tatsächlich die Anwesenheitsinformation "aktiv" zugeordnet ist. Andernfalls wird die Nachricht gelöscht oder an ein anderes durch die Anwesenheitsinformation bezeichnetes Ziel weitergeleitet.

Instant-Messaging-Systeme setzen grundsätzlich voraus, daß ein potentieller Adressat einer Nachricht erreichbar ist. Anders als bei E-Mail-Systemen, bei denen Verzögerungen von Nachrichtenübermittlung und -beantwortung üblich sind, ist bei Instant-Messaging-Systemen ein Versenden einer Nachricht an einen Adressaten, der die Nachricht erst Stunden oder Tage später empfängt, im allgemeinen unerwünscht. Daher kommen Vorkehrungen zur Ermittlung von genauen Anwesenheitsinformationen, die Benutzern in einem Kommunikationssystem zugeordnet sind, eine große Bedeutung zu.

Der vorliegenden Erfindung liegt daher die Aufgabe zugrunde, ein effizientes Verfahren zur Aktualisierung einer einem Benutzer eines Kommunikationsdienstes zugeordneten Anwesenheitsinformation sowie geeignete Mittel zur Durchführung des Verfahrens anzugeben.

Diese Aufgabe wird erfindungsgemäß durch ein Verfahren mit den in Anspruch 1, ein Kommunikationssystem mit den in Anspruch 5 und ein Steuerungsprogramm mit den in Anspruch 6 angegebenen Merkmalen gelöst. Vorteilhafte Weiterbildungen der vorliegenden Erfindung sind in den abhängigen Ansprüchen angegeben.

Ein wesentlicher Aspekt der vorliegenden Erfindung liegt darin, daß auf Freigabe eines zur Benutzung eines Kommunikationsdienstes registrierten Benutzers einem ausgewählten weiteren Benutzer eine Berechtigung zur Veränderung einer Anwesenheitsinformation eingeräumt wird. Die Anwesenheitsinformation bezeichnet einen Anwesenheitszustand des Benutzers und wird an einen Server zur Verwaltung von Anwesenheitsinformationen übermittelt, dort gespeichert und für vorgebbare weitere Benutzer verfügbar gemacht. Durch Einführung einer Stellvertreter-ähnlichen Berechtigung zur Veränderung der Anwesenheitsinformation zu einem Benutzer ergeben sich Vorteile im Hinblick auf eine schnelle und genaue Erfassung und Bereitstellung der Anwesenheitsinformation, die damit nicht mehr zwangsläufig ausschließlich dem Benutzer obliegt.

Entsprechend einer vorteilhaften Ausgestaltung der vorliegenden Erfindung ist der Kommunikationsdienst ein Instant-Messaging-Dienst. Dies ermöglicht Echtzeit-Kommunikation oder Kommunikation in nahezu Echtzeit.

Vorteilhafterweise wird die Anwesenheitsinformation für die vorgebbaren weiteren Benutzer abrufbar verfügbar gemacht oder mittels einer Multicast-Nachricht an die vorgebbaren weiteren Benutzer übermittelt. Dies ermöglicht eine effiziente Übermittlung bzw. Verteilung der Anwesenheitsinformation.

Entsprechend einer weiteren vorteilhaften Ausgestaltung der vorliegenden Erfindung wird die Berechtigung zur Veränderung der Anwesenheitsinformation mittels einer vom Benutzer an den Server übermittelten Meldung eingeräumt wird, in welcher der ausgewählte weitere Benutzer bezeichnet ist. Hierdurch ergibt sich eine mit geringem Aufwand mögliche Implementierung der Einräumung einer Berechtigung.

Die vorliegende Erfindung wird nachfolgend an einem Ausführungsbeispiel anhand der Zeichnung näher erläutert. Es zeigt
- Figur 1: ein Anwendungsumfeld der vorliegenden Erfindung mit einem Server zur Bereitstellung eines Instant-Messaging-Dienstes und zur Verwaltung von Anwesenheitsinformationen und mit mehreren Clients zur Benutzung des Instant-Messaging-Dienstes,
- Figur 2: ein Diagramm über Meldungsaustausch zwischen den Clients und dem Server bei einem Start einer Instant-Messaging-Anwendung und bei einer Änderung von Anwesenheitsinformationen.

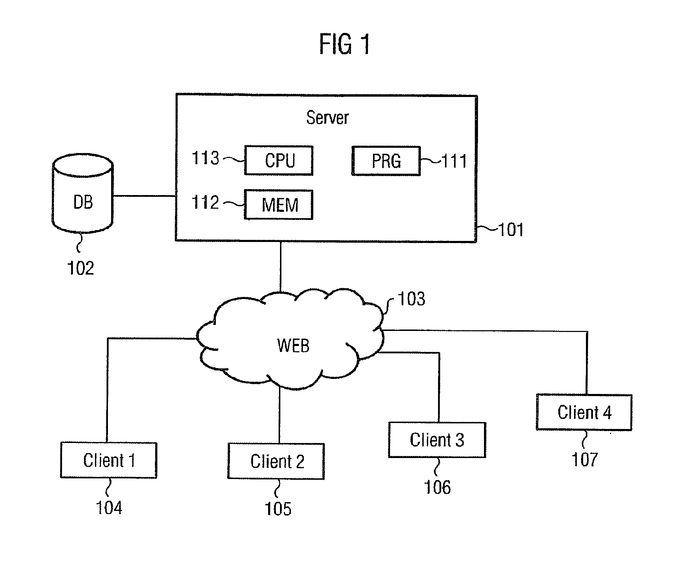

Das in Figur 1 dargestellte Anwendungsumfeld umfaßt einen Server 101, durch den ein Instant-Messaging-Dienst zur Nutzung an mehreren Clients 104 bis 107 bereitgestellt wird. Die Clients 104 bis 107 sind mit dem Server 101 über ein Datennetz 103, beispielsweise das Internet verbunden. Durch den Instant-Messaging-Dienst werden über den Server 101 Echtzeit-Kommunikationsverbindungen zwischen Clients aufgebaut, an denen ein jeweiliger Benutzer eine Instant-Messaging-Anwendung gestartet hat. Dem Server 101 kommt dabei insbesondere die Aufgabe der Steuerung und Überwachung der Kommunikationsverbindungen zwischen den Clients 104 bis 107 zu. Hierzu zählt beispielsweise auch die Überwachung der für die Bereitstellung des Instant-Messaging-Dienstes notwendigen Bandbreite und der Dienstgüte (Quality of Service).

Neben der Bereitstellung des Instant-Messaging-Dienstes kommt dem Server 101 die Aufgabe zu, Anwesenheitsinformationen zu Benutzern des Instant-Messaging-Dienstes zu verwalten. Vorteilhafterweise werden derartige Anwesenheitsinformationen bei einem Start einer Instant-Messaging-Anwendung an einem der Clients 104 bis 107 durch den Server 101 als Reaktion auf eine Anforderung eines Benutzers zur Bereitstellung einer Instant-Messaging-Anwendung erfaßt. Zur Speicherung der Anwesenheitsinformationen ist eine dem Server 101 zugeordnete Datenbank 102 vorgesehen. Außerdem nimmt der Server 101 die Aufgabe war, Anwesenheitsinformationen für einen Benutzer, der aktuell einen Instant-Messaging-Dienst nutzt, an vorgebbare weitere Benutzer zu übermitteln. Die vorgebbaren weiteren Benutzer können beispielsweise Mitglieder einer konfigurierten Benutzergruppe sein, beispielsweise einer "buddy list".

Anwesenheitsinformationen können beispielsweise kann mittels einer Multicast-Nachricht an die vorgebbaren weiteren Benutzer übermittelt werden. Alternativ dazu ist es möglich, die Anwesenheitsinformation für die vorgebbaren weiteren Benutzer derart abrufbar verfügbar zu machen, daß nur die vorgebbaren weiteren Benutzer berechtigt sind, die Anwesenheitsinformation abzufragen. Darüberhinaus ist der Server 101 zur Einräumung einer Berechtigung zur Veränderung der einem Benutzer zugeordneten Anwesenheitsinformation durch einen ausgewählten weiteren Benutzer vorgesehen, beispielsweise ein Stellvertreter. Voraussetzung ist, daß hierzu eine Freigabe des betroffenen Benutzers vorliegt.

Zur Wahrnehmung der beschriebenen Aufgaben ist auf dem Server 101 ein Steuerungsprogramm 111 installiert, daß in einen Arbeitsspeicher 112 des Servers 101 ladbar ist und dessen Codeabschnitte durch einen Prozessor 113 des Servers 101 ausführbar sind. Bei Ausführung des Steuerungsprogramms 111 wird eine Übermittlung einer Information, die einen Anwesenheitszustand eines zur Benutzung des Instant-Messaging-Dienstes registrierten Benutzers bezeichnet, an den Server 101 zur Verwaltung von Anwesenheitsinformationen veranlaßt. Des weiteren wird bei Ausführung des Steuerungsprogramms 111 die an den Server 101 übermittelte Information als eine dem Benutzer zugeordnete Anwesenheitsinformation gespeichert und für vorgebbare weitere Benutzer verfügbar gemacht. Außerdem wird auf Benutzerfreigabe einem ausgewähltem weiteren Benutzer eine Berechtigung zur Veränderung der Anwesenheitsinformation eingeräumt. Diese Schritte werden ausgeführt, wenn das Steuerungsprogramm 111 auf dem Server 101 abläuft.

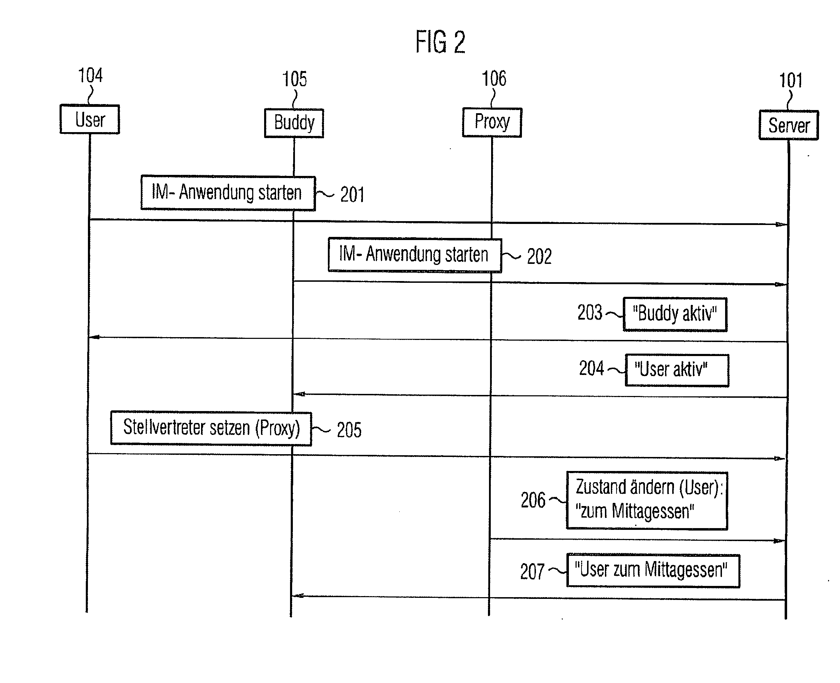

Das in Figur 2 dargestellte Diagramm veranschaulicht einen Meldungsaustausch zwischen den Clients 104 bis 107 und dem Server 101 bei einem Start einer Instant-Messaging-Anwendung und bei einer Änderung einer Anwesenheitsinformation. Zum Start einer Instant-Messaging-Anwendung durch einen Benutzer an einem ersten Client 104 wird eine Meldung 201 mit einer Anforderung zum Start einer Instant-Messaging-Anwendung an den Server 101 übermittelt. Der Server 101 überprüft daraufhin die Berechtigung des Benutzers zum Start einer Instant-Messaging-Anwendung und ruft ein Benutzerprofil ab. Aus dem Benutzerprofil ergibt sich beispielsweise eine konfigurierte Benutzergruppe, deren Mitglieder sich gegenseitig die Berechtigung eingeräumt haben, den anderen Mitgliedern der Benutzergruppe Anwesenheitsinformationen verfügbar zu machen.

Für die nachfolgenden Betrachtungen wird angenommen, daß der Benutzer an dem ersten Client 104 der erste Benutzer innerhalb der Benutzergruppe ist, der eine Instant-Messaging-Anwendung startet und dem daher die Anwesenheitsinformation "aktiv" zugeordnet ist. Aus diesem Grund wird der Benutzer am ersten Client 104 noch nicht über Anwesenheitszustände anderer Benutzer innerhalb der Benutzergruppe informiert. Dies erfolgt erst nach einem Start einer Instant-Messaging-Anwendung eines weiteren Mitgliedes der Benutzergruppe an einem zweiten Client 105.

Zum Start der Instant-Messaging-Anwendung am zweiten Client 105 wird auch in diesem Fall zunächst eine Meldung 202 mit einer Anforderung zum Start einer Instant-Messaging-Anwendung an den Server 101 übermittelt und daraufhin durch den Server 101 überprüft und bearbeitet. Bei erfolgreicher Überprüfung der Anforderung durch den Server 101 wird die Instant-Messaging-Anwendung am zweiten Client 105 bereitgestellt. Außerdem wird der Benutzer am ersten Client 104 mittels einer Meldung 203 über den neuen Anwesenheitszustand des weiteren Mitgliedes der Benutzergruppe informiert. In analoger Weise wird auch das weitere Mitglied der Benutzergruppe am zweiten Client 105 über den Anwesenheitszustand des Benutzers mittels einer Meldung 204 informiert.

Möchte der Benutzer am ersten Client 104 die Aktualisierung seines Anwesenheitszustandes beispielsweise an einen Stellvertreter an einen dritten Client 106 delegieren, so sendet der Benutzer am ersten Client 104 eine Meldung 205 mit einer Anforderung zum Setzen eines Stellvertreters an den Server 101. In dieser Meldung 205 wird der Stellvertreter am dritten Client 106 als zur Veränderung der dem Benutzer am ersten Client 104 zugeordneten Anwesenheitsinformation berechtigter Benutzer bezeichnet. Auf diese Benutzerfreigabe räumt der Server 101 dem Stellvertreter am dritten Client 106 die angeforderte Berechtigung ein. Ändert sich nun beispielsweise der Anwesenheitszustand des Benutzers am ersten Client 104, ohne daß dieser die Aktualisierung der ihm zugeordneten Anwesenheitsinformation selbst veranlaßt, so kann der Stellvertreter am dritten Client 106 dies mittels einer Meldung 206 mit einer Anforderung zur Änderung der dem Benutzer am ersten Client 104 zugeordneten Anwesenheitsinformation veranlassen. Der Server 101 ändert daraufhin bei vorliegender Berechtigung den Anwesenheitszustand des Benutzers am ersten Client 104 und übermittelt eine Meldung 207 über eine Änderung des Anwesenheitszustandes des Benutzers am ersten Client 104 an das weitere Mitglied der Benutzergruppe am zweiten Client 105. Ein typisches Anwendungsbeispiel ist die Aktualisierung einer Anwesenheitsinformation zu einem Benutzer während einer Mittagspause durch die eine dem Benutzer zugeordnete Teamassistentin.

Die Anwendung der vorliegenden Erfindung ist nicht auf das hier beschriebene Ausführungsbeispiel beschränkt, sondern auf die Ansprüche 1 bis 6.

## Patentansprüche

1. Verfahren zur Aktualisierung einer einem Benutzer eines Kommunikationsdienstes zugeordneten Anwesenheitsinformation, bei dem
- eine einen Anwesenheitszustand eines zur Benutzung eines Kommunikationsdienstes registrierten Benutzers (104-105) bezeichnende Information (201-202) an einen Server (101) zur Verwaltung von Anwesenheitsinformationen übermittelt wird,
- die an den Server (101) übermittelte Information (201-202) als eine dem Benutzer (104-105) zugeordnete Anwesenheitsinformation gespeichert und für vorgebbare weitere Benutzer (104-105) verfügbar gemacht wird,
**dadurch gekennzeichnet, daß** auf Benutzerfreigabe (205) einem ausgewählten weiteren Benutzer (106) eine Berechtigung zur Veränderung der Anwesenheitsinformation eingeräumt wird.

2. Verfahren nach Anspruch 1,
bei dem der Kommunikationsdienst ein Instant-Messaging-Dienst ist.

3. Verfahren nach einem der Ansprüche 1 oder 2,
bei dem die Anwesenheitsinformation für die vorgebbaren weiteren Benutzer abrufbar verfügbar gemacht wird oder mittels einer Multicast-Nachricht an die vorgebbaren weiteren Benutzer übermittelt wird.

4. Verfahren nach einem der Ansprüche 1 bis 3,
bei dem die Berechtigung zur Veränderung der Anwesenheitsinformation mittels einer vom Benutzer an den Server übermittelten Meldung eingeräumt wird, in welcher der ausgewählte weitere Benutzer bezeichnet ist.

5. Kommunikationssystem mit
- Mitteln zur Bereitstellung eines Kommunikationsdienstes,
- einem Server (101) zur Verwaltung von Anwesenheitsinformationen zu Benutzern (104-107) des Kommunikationsdienstes, **dadurch gekennzeichnet, daß** Mittel zur Bereitstellung einer Anwesenheitsinformation (203-204) zu einem Benutzer (104-105) an vorgebbare weitere Benutzer (104-105) und zur Einräumung einer Berechtigung bei Benutzerfreigabe (205) zur Veränderung der Anwesenheitsinformation durch einen ausgewählten weiteren Benutzer (106) vorgesehen sind.

6. Steuerungsprogramm, das in einen Arbeitsspeicher einer Recheneinrichtung ladbar ist und zumindest einen Codeabschnitt aufweist, bei dessen Ausführung
- eine Übermittlung einer einen Anwesenheitszustand eines zur Benutzung eines Kommunikationsdienstes registrierten Benutzers (104-105) bezeichnenden Information (201-202) an einen Server (101) zur Verwaltung von Anwesenheitsinformationen veranlaßt wird,
- die an den Server (101) übermittelte Information als eine dem Benutzer (104-105) zugeordnete Anwesenheitsinformation gespeichert und für vorgebbare weitere Benutzer (104-105)
verfügbar gemacht wird, daduch gekennzeichnet, daß
- auf Benutzerfreigabe (205) einem ausgewählten weiteren Benutzer (106) eine Berechtigung zur Veränderung der Anwesenheitsinformation eingeräumt wird,
wenn das Steuerungsprogramm in der Recheneinrichtung abläuft.

## Claims

1. A method for updating presence data allocated to a user of a communication service, in which
- data (201-202) characterising a presence state of a user (104-105) registered to use a communication service is transmitted to a server (101) for the management of presence data,
- the data (201-202) transmitted to the server (101) is stored as presence data allocated to the user (104-105) and is made available for predefinable other users (104-105),
wherein, upon user release (205), authorization to change the presence data is
given to a selected other user (106).

2. The method of claim 1 wherein the communication service is an instant messaging service.

3. The method of either of claims 1 or 2 wherein the presence data is made available for the predefinable other users in a retrievable manner or is sent to the predefinable other users by way of a multicast message.

4. The method of any one of claims 1 to 3 wherein the authorization to change the presence data is given by way of a message sent by the user to the server in which the selected other user is indicated.

5. A communication system having
- means for the provision of a communication service,
- a server (101) for the management of presence data about users (104-107) of the communication service,
wherein means are provided for the supply of presence data (203-204) about a user (104-105) to predefinable other users (104-105) and for giving an authorization, upon user release (205), to change the presence data by a selected other user (106).

6. A control programme which can be loaded into a working memory of a processing device and which exhibits at least one code section upon whose execution
- a transmission of data (201-202) characterising a presence state of a user (104-105) registered to use a communication service is initiated to a server (101) for the management of presence data,
- the data transmitted to the server (101) is stored as presence data allocated to the user (104-105) and is made available for predefinable other users (104-105), wherein
- upon user release (205), a selected other user (106) is given an
authorisation to change the presence data,
when the control programme runs in the processing device.

## Revendications

1. Procédé d'actualisation d'une information de présence affectée à un utilisateur d'un service de communication, selon lequel
- une information (201-202) désignant un état de présence d'un utilisateur (104-105) inscrit pour l'utilisation d'un service de communication est transmise à un serveur (101) à des fins de gestion d'informations de présence,
- l'information (201-202) transmise au serveur (101) est enregistrée en tant qu'information de présence affectée à l'utilisateur (104-105) et mise à disposition d'autres utilisateurs prédéfinis (104-105),
**caractérisé en ce que**, en cas de validation d'utilisateur (205), une autorisation de modifier l'information de présence est accordée à un autre utilisateur sélectionné (106).

2. Procédé selon la revendication 1,
selon lequel le service de communication est un service de messagerie instantanée.

3. Procédé selon l'une quelconque des revendications 1 ou 2,
selon lequel l'information de présence est rendue disponible à d'autres utilisateurs définis du fait qu'elle puisse être appelée ou être transmise aux autres utilisateurs prédéfinis au moyen d'un message de multidiffusion.

4. Procédé selon l'une quelconque des revendications 1 à 3,
selon lequel l'autorisation de modifier l'information de présence est accordée au moyen d'une annonce transmise par l'utilisateur au serveur, dans laquelle l'autre utilisateur sélectionné est désigné.

5. Système de communication douté :
- de moyens de mise à disposition d'un service de communication,
- d'un serveur (101) destiné à la gestion d'informations de présence pour des utilisateurs (104-107) du service de communication,
**caractérisé en ce que** sont prévus des moyens destinés à mettre à disposition une information de présence (203-204) sur un utilisateur (104-105) à d'autres utilisateurs prédéfinis (104-105) et destinés à accorder, en cas de validation d'utilisateur (205), une autorisation de modifier l'information de présence par un autre utilisateur sélectionné (106).

6. Programme de commande qui peut être chargé dans une mémoire de travail d'un système informatique et comporte au moins un extrait de code lors de l'exécution duquel
- est ordonnée une transmission d'une information (201-202) désignant un état de présence d'un utilisateur (104-105), inscrit pour l'utilisation d'un service de communication, à un serveur (101) à des fins de gestion d'informations de présence,
- l'information transmise au serveur (101) est enregistrée en tant qu'information de présence affectée à l'utilisateur (104-105) et rendue disponible à d'autres utilisateurs prédéfinis (104-105), **caractérisé en ce que**,
- en cas de validation d'utilisateur 205), une autorisation de modification de l'information de présence est accordée à un autre utilisateur sélectionné (106), lorsque le programme de commande se déroule dans le système informatique.
